# EUROPEAN PATENT APPLICATION

(11) **EP 4 036 819 A1**
(43) Date of publication of application: **03.08.2022**
(21) Application number: 21153916.8
(22) Date of filing: 28.01.2021
(51) Int. Cl.: G06Q 10/00, G06Q 10/06, G06Q 10/04, G06Q 50/06

(54) **APPARATUS FOR OPERATING MAINTENANCE MODEL MODELLING PART OF WATER DISTRIBUTION SYSTEM**

(71) Applicant: Uros AG, 8808 Pfäffikon SZ (CH)
(72) Inventor: Rahikainen, Ilkka, 90530 Oulu (FI); Korkiakoski, Jari, 90530 Oulu (FI); Nikurautio, Hannu, 90530 Oulu (FI)
(74) Representative: Kolster Oy Ab

(57) **Abstract**

Apparatus (100) for operating maintenance model modelling part of water distribution system (140) is disclosed. The apparatus (100) includes a sensor (170) positioned in one measurement point, and configured to measure (1304) a measured variable (172) from the water distribution system (140). The apparatus (100) is caused to perform: obtaining the maintenance model (120A); comparing the measured variable (172) to an allowed variable range (122A) of the maintenance model (120A); and based on the comparing, replacing the maintenance model (120A) with a maintenance model variant (120B).

## Description

### FIELD

Various embodiments relate to an apparatus for operating a maintenance model modelling a part of a water distribution system.

### BACKGROUND

A water distribution system uses different active elements such as valves, pumps, and water reservoirs, which have different functional simulation models so that the water distribution system may be analyzed with other elements such as pipes and circumstances related to usage, leakage, etc. The maintenance model is based a certain level of pressure and flow, and if the pressure is lower, the maintenance model does not work correctly. A technical problem is how to ensure that the maintenance model gives reliable values and works in different conditions.

### BRIEF DESCRIPTION

According to an aspect, there is provided subject matter of independent claims. Dependent claims define some embodiments.

One or more examples of implementations are set forth in more detail in the accompanying drawings and the description of embodiments.

### LIST OF DRAWINGS

Some embodiments will now be described with reference to the accompanying drawings, in which
FIG. 1 illustrates embodiments of an apparatus;
FIG. 2, FIG. 3, and FIG. 4 illustrate embodiments of maintenance models;
FIG. 5, FIG. 6, FIG. 7, FIG. 8, FIG. 9, FIG. 10, FIG. 11, and FIG. 12 illustrate embodiments applied to a pump maintenance model; and
FIG. 13 is a flow chart illustrating embodiments of a method.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

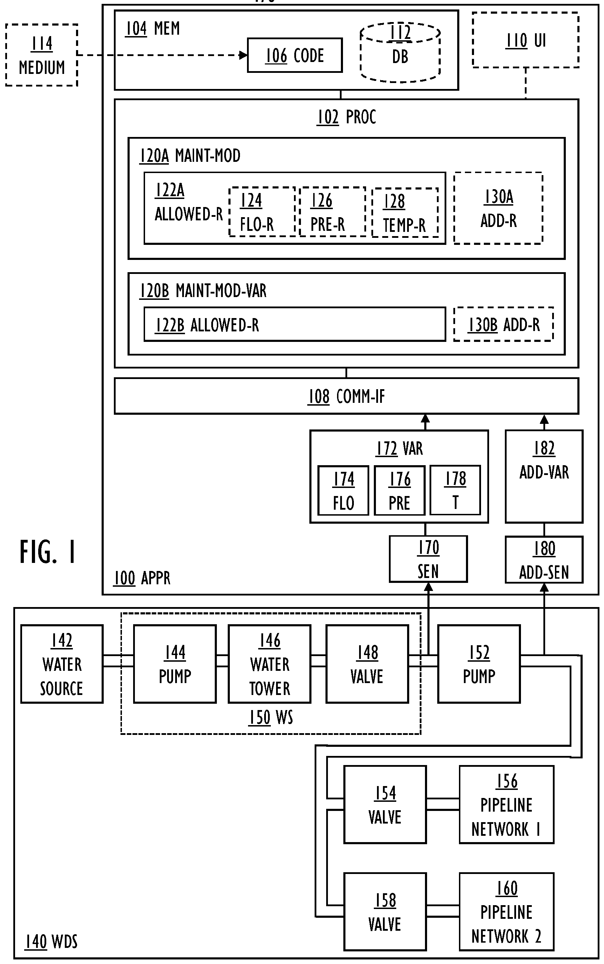

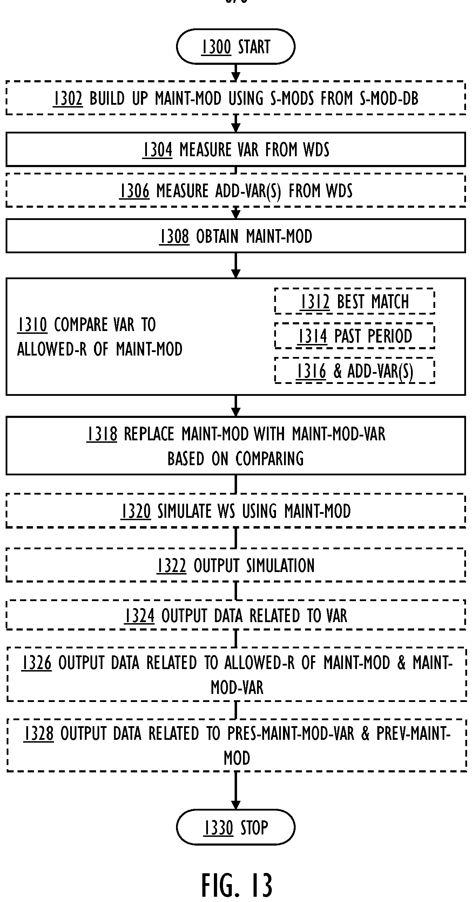

Let us study simultaneously FIG. 1, which illustrates embodiments of an apparatus 100 for operating a maintenance model modelling a part of a water distribution system 140, and FIG. 13, which illustrates embodiments of an operation of the apparatus 100 as a method/algorithm.

The method starts in 1300 and ends in 1330. Note that the method may run as long as required (after the start-up of the apparatus 100 until switching off) by looping back to an earlier operation.

The operations are not strictly in chronological order in FIG. 13, and some of the operations may be performed simultaneously or in an order differing from the given ones. Other functions may also be executed between the operations or within the operations and other data exchanged between the operations. Some of the operations or part of the operations may also be left out or replaced by a corresponding operation or part of the operation. It should be noted that no special order of operations is required, except where necessary due to the logical requirements for the processing order.

The apparatus 100 comprises a sensor 170 positioned in one measurement point, and configured to measure a measured variable 172 from the water distribution system 140 in 1304.

The apparatus 100 also comprises one or more memories 104 including computer program code 106, and one or more processors 102 configured to execute the computer program code 106 to cause the apparatus 100 to perform the required operations.

In 1308, the maintenance model 120A is obtained. The maintenance model 120A thus obtained is the maintenance model 120A that is currently in used, and it may be obtained by reading from the memory 104 or by a (internal or external) query operation to the application operating the maintenance model 120A.

As shown in FIG. 1, the water distribution system 140 comprises various components. A water source 142 provides water for a water storage 150. A pump 152 is configured to pump the water from the water storage 150 through valves 154, 158 to two different pipeline networks 156, 160. The water storage 150 includes a pump 144 configured to pump the water from the water source 142 to a water tower 146, from which the water is configured to be released through a valve 148 to the pump 152. Note the placement of the sensor 170 at the input of the pump 152. A pump is a widely used component in any water distribution system 140 to produce pressure and flow in the pipeline system.

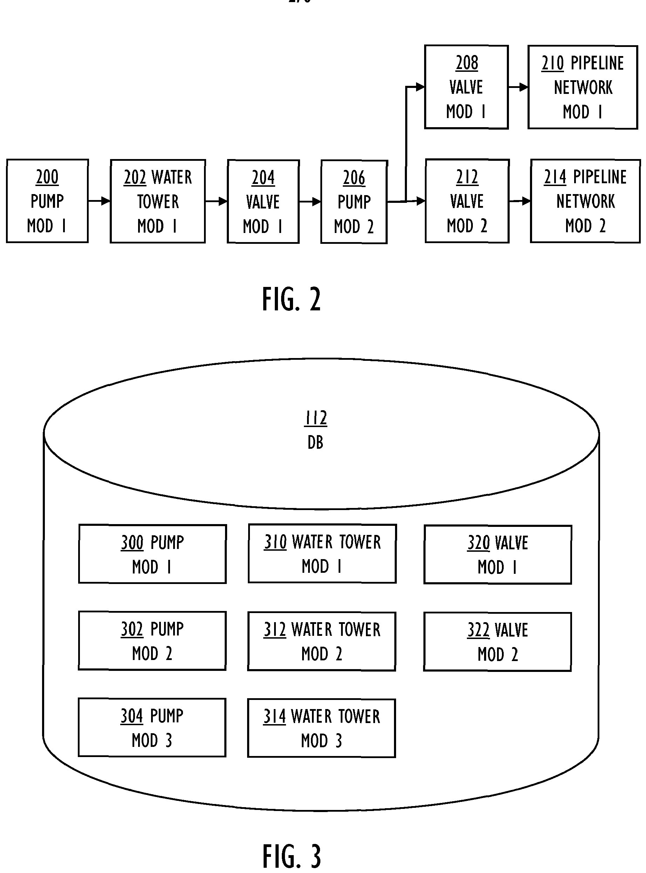

FIG. 2 illustrates a complete maintenance model of the water distribution system 140, i.e., a plurality of maintenance models 200, 202, 204, 204, 206, 208, 210, 212, 214, each modelling a part of the water distribution system 140.

The maintenance model 120A of FIG. 1 models a part of the water distribution system 140, i.e., the maintenance model 120A is one of the maintenance models 200, 202, 204, 204, 206, 208, 210, 212, 214 of FIG. 2.

The maintenance model 120A may have been chosen from a collection 112 of different types of maintenance models implemented as a database or other applicable data storage structure. The collection 112 comprises different types of maintenance models including, but not limited to: a pump maintenance model 300, a valve maintenance model 320, a reservoir maintenance model, a water tank maintenance model, a water tower maintenance model 310, a cistern maintenance model, a pumping station maintenance model, an elevated section of a pipeline maintenance model. As illustrated in FIG. 3, each type of the maintenance model may comprise several alternative maintenance model variants: three different pump maintenance models 300, 302, 304, three different water tower maintenance models 310, 312, 314, and two different valve maintenance models 320, 322, for example.

In 1310, the measured variable 172 is compared to an allowed variable range 122A of the maintenance model 120A.

Based on the comparing in 1310, the maintenance model 120A is replaced with a maintenance model variant 120B in 1318.

In an embodiment, the apparatus 100 is implemented as a distributed apparatus: the sensor 170 being positioned to measure the water distribution system 140, and a processing part comprising the one or more memories 104 including the computer program code 106 and the one or more processors 102.

The sensor 170 may comprise one or more sensors configured to measure a physical quantity and convert it into an electrical signal. In an embodiment, the measured variable 172 comprises a measured flow 174 and/or a measured pressure 176 and/or a measured temperature 178. Accordingly, the allowed variable range 122A comprises a flow range 124 and/or a pressure range 126 and/or a temperature range 128.

The sensor 170 may comprise other types of sensors configured to measure other physical quantities relating to a humidity, a pH, a vibration (measured by an accelerometer), an electrical quantity such as an electrode potential, an optical quantity such as a transparency or a scattering, or some other physical quantity, for example. The sensor 170 may also receive some external data and pass it on, or generate some further data on the basis of the external data. The external data may relate to positioning, for example. The external data may include signal transmitted by satellites of a global navigation satellite system (GNSS), and/or location coordinates generated by cellular radio positioning.

In general, the sensor 170 may comprise other parts such as a processor, a communication interface, a battery to provide electric energy for its operation (or other power source or power interface), and a housing protecting electronics from external influences (dust, moisture, mechanical shocks, etc.). The battery may be an electric battery converting stored chemical energy into electrical energy. The electric battery may be rechargeable.

The apparatus 100 may comprise a communication interface 108 configured to communicate with the sensor 170.

The term 'processor' 102 refers to a device that is capable of processing data. Depending on the processing power needed, the apparatus 100 may comprise several processors 102 such as parallel processors, a multicore processor, or a computing environment that simultaneously utilizes resources from several physical computer units (sometimes these are referred as cloud or virtualized computing environments). When designing the implementation of the processor 102, a person skilled in the art will consider the requirements set for the size and power consumption of the apparatus 100, the necessary processing capacity, production costs, and production volumes, for example.

A non-exhaustive list of implementation techniques for the processor 102 and the memory 104 includes, but is not limited to: logic components, standard integrated circuits, application-specific integrated circuits (ASIC), system-on-a-chip (SoC), application-specific standard products (ASSP), microprocessors, microcontrollers, digital signal processors, special-purpose computer chips, field-programmable gate arrays (FPGA), and other suitable electronics structures.

The term 'memory' 104 refers to a device that is capable of storing data run-time (= working memory) or permanently (= non-volatile memory). The working memory and the non-volatile memory may be implemented by a random-access memory (RAM), dynamic RAM (DRAM), static RAM (SRAM), a flash memory, a solid state disk (SSD), PROM (programmable read-only memory), a suitable semiconductor, or any other means of implementing an electrical computer memory.

The computer program code 106 may be implemented by software. In an example embodiment, the software may be written by a suitable programming language, and the resulting executable code may be stored in the memory 104 and run by the processor 102. The computer program code 106 implements the method/algorithm illustrated in FIG. 13. The computer program code 106 may be coded as a computer program (or software) using a programming language, which may be a high-level programming language, such as C, C++ or Rust, or a low-level programming language, such as a machine language or an assembler, for example. The computer program code 106 may be in source code form, object code form, executable file, or in some intermediate form, but for use in the one or more processors 102 it is in an executable form. There are many ways to structure the computer program code 106: the operations may be divided into modules, sub-routines, methods, classes, objects, applets, macros, etc., depending on the software design methodology and the programming language used. In modern programming environments, there are software libraries, i.e. compilations of ready-made functions, which may be utilized by the computer program code 106 for performing a wide variety of standard operations. In addition, an operating system (such as a general-purpose operating system) may provide the computer program code 106 with system services.

An example embodiment provides a computer-readable medium 114 storing computer program code 106, which, when loaded into the one or more processors 102 and executed by one or more processors 102, causes the one or more processors 102 to perform the computer-implemented method/algorithm. The computer-readable medium 114 may comprise at least the following: any entity or device capable of carrying the computer program code 106 to the one or more processors 102, a record medium, a computer memory, a read-only memory, an electrical carrier signal, a telecommunications signal, and a software distribution medium. In some jurisdictions, depending on the legislation and the patent practice, the computer-readable medium 114 may not be the telecommunications signal. In an example embodiment, the computer-readable medium 114 may be a computer-readable storage medium. In an example embodiment, the computer-readable medium 114 may be a non-transitory computer-readable storage medium.

Note that the processor of the sensor 170 may be implemented with similar technologies.

In an example embodiment, the apparatus 100 may be a stand-alone apparatus 100 as in FIG. 1, i.e., the apparatus 100 is a separate unit as well as the sensor 170 is a separate unit. The communication interface 108 may be implemented with a standard or proprietary wireless or wired communication technology.

The apparatus 100 as the separate unit may be implemented as a physical unit, or as a service implemented by a networked server apparatus.

The apparatus 100 may be a computer, laptop computer, tablet computer, smartphone, general-purpose mobile computing device, or some other electronic data processing apparatus. The apparatus 100 may be a general-purpose off-the-shelf computing device, as opposed to a purpose-build proprietary equipment, whereby research & development costs will be lower as only the special-purpose software (and not the hardware) needs to be designed, implemented, and tested.

The networked server apparatus 100 may be a networked computer server, which interoperates with the sensor 170 according to a client-server architecture, a cloud computing architecture, a peer-to-peer system, or another applicable distributed computing architecture.

In an example embodiment, the communication interface 108 may comprise one or more wireless transceivers configured to operate using one or more of the following: a cellular radio network, a wireless local area network (WLAN), a short-range radio network (such as Bluetooth), a radio network employing a subscriber identity module (SIM), one or more subscriber identity modules selected from among a plurality of subscriber identity modules coupled with the one or more wireless transceivers.

The wireless data transmission may be implemented with a suitable cellular communication technology such as GSM, GPRS, EGPRS, WCDMA, UMTS, 3GPP, IMT, LTE, LTE-A, 3G, 4G, 5G etc. and/or with a suitable non-cellular communication technology such as Bluetooth, Bluetooth Low Energy, Wi-Fi, WLAN, Zigbee, etc. Other applicable technologies include LPWAN (Low Power Wide Area Network), NB-IoT (Narrowband loT), Sigfox, LoRaWAN (Long Range Wide Area Network), QT network, etc.

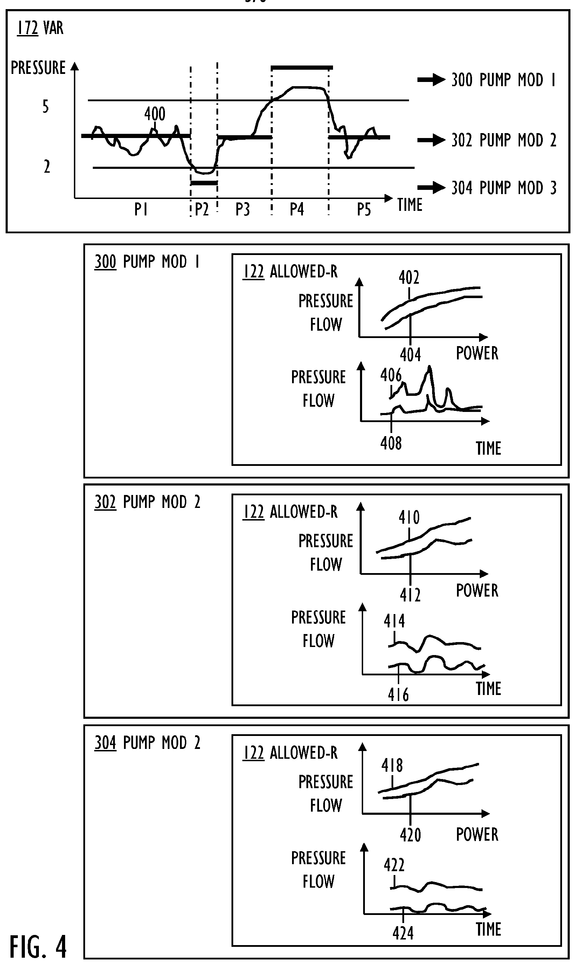

FIG. 4 illustrates embodiments of maintenance models 300, 302, 304 for the pump 152 of FIG. 1. Note that although embodiments show two alternative maintenance models 120A, 120B as in FIG. 1 or three alternative maintenance models 300, 302, 304 as in FIG. 3 and FIG. 4, more alternatives may exist.

The measured variable 172 is depicted on the upper part of FIG. 4. The measured variable 172 defines in the y axis the input pressure of the pump 152 (in bars) as a function of time on the x axis. A function between the time and the pressure is illustrated by a curve 400.

The lower part of FIG. 4 also illustrates the reference parameters 122 of each maintenance model 300, 302, 304. The reference parameters 122 are illustrated by curves 406, 414, 422 in a similar co-ordinate system as the curve 400. Note that curves 408, 416, 424 illustrate the input flow of the pump as a function of time. Also, curves 402, 404, 410, 412, 418, 420 illustrate the pump input pressure and input flow (in litres/minute) as a function of the power (in watts) fed to the pump 142.

In an embodiment also illustrated in FIG. 4, the replacing in 1318 is performed based on a best match 1312 of the measured variable 172 against the allowed variable range 122B of the maintenance model variant 120B in the comparing 1310. The best match 1312 may be found by comparing the measured curve 400 with the allowed range curves 406, 414, 422 as explained above.

In an embodiment, the comparing in 1310 is performed based on a plurality of values of the measured variable 172 measured during a past measurement period 1314. In this way, the comparison 1310 is not based on error-prone single values but on multiple values.

In an embodiment, for the comparing in 1310, an arithmetic mean is calculated to represent an average value of the plurality of values of the measured variable 172 measured during the past measurement period 1314. The past measurement period may be expressed in hours or days, for example, and it may cover a day, a week, a month, or a year, wherein each of these time periods may contain some kind of periodic or cyclic behaviour. For example, the water usage may increase during a morning shower in the workdays, but not necessarily during the weekend. Or in another example, various seasons with different temperatures may have an effect on the functioning of the water distribution system 140, for example.

Let us return to FIG. 1, which illustrates an embodiment, wherein the apparatus 100 comprises one or more additional sensors 180 positioned in one or more other measurement points, and configured to measure one or more additional measured variables 182 from the water distribution system 140. The apparatus 100 is also caused, in the comparing in 1310, to compare 1316 also the one or more additional measured variables 182 to one or more additional allowed variable ranges 130A of the maintenance model 120A.

In an embodiment illustrated in FIG. 1, the apparatus 100 comprises a user interface 110 configured to interact with a user. The user interface 110 may comprise a screen displaying the simulation with appropriate structures and parameters, for example. Note that the user interface 110 may be a part of the apparatus 100, or the user interface 110 may be communicatively coupled with the apparatus 100. The user interface 110 may thus be a part of user apparatus carried by a person on call, or operated by a maintenance technician or engineer.

In an embodiment, the apparatus 100 is caused to simulate an operation of a part of the water distribution system 140 using the maintenance model 120A or the maintenance model variant 120B in 1320, and output in 1322, via the user interface 110, the simulated operation.

In an embodiment, the apparatus 100 is caused to output in 1324, via the user interface 110, data related to the measured variable 172.

In an embodiment, the apparatus 100 is caused to output in 1326, via the user interface 110, data related to the allowed variable range 122A of the maintenance model 120A, and the allowed variable range 122B of the maintenance model variant 120B.

In an embodiment, the apparatus 100 is caused to output in 1328, via the user interface 110, data related to the present maintenance model variant 120B, and data related to the previous maintenance model 120A.

In summary, the above described embodiments ensure that a most suitable maintenance model, either the maintenance model 120A, or a maintenance model variant 120B is used, depending on the measured variable 172. In this way, the simulation with the maintenance model works even if the pressure or flow at least in a part of the water system 140 drops to a very low level, and gives reliable results in all conditions. Let us return to FIG. 4 illustrating the changing of the maintenance model: during the first time period P1 the measured pressure is within the allowed range 122 of the second maintenance model 302, during P2 within the allowed range 122 of the third maintenance model 304, during P3 within the allowed range 122 of the second maintenance model 302, during P4 within the allowed range 122 of the first maintenance model 300, and during P5 within the allowed range 122 of the second maintenance model 302.

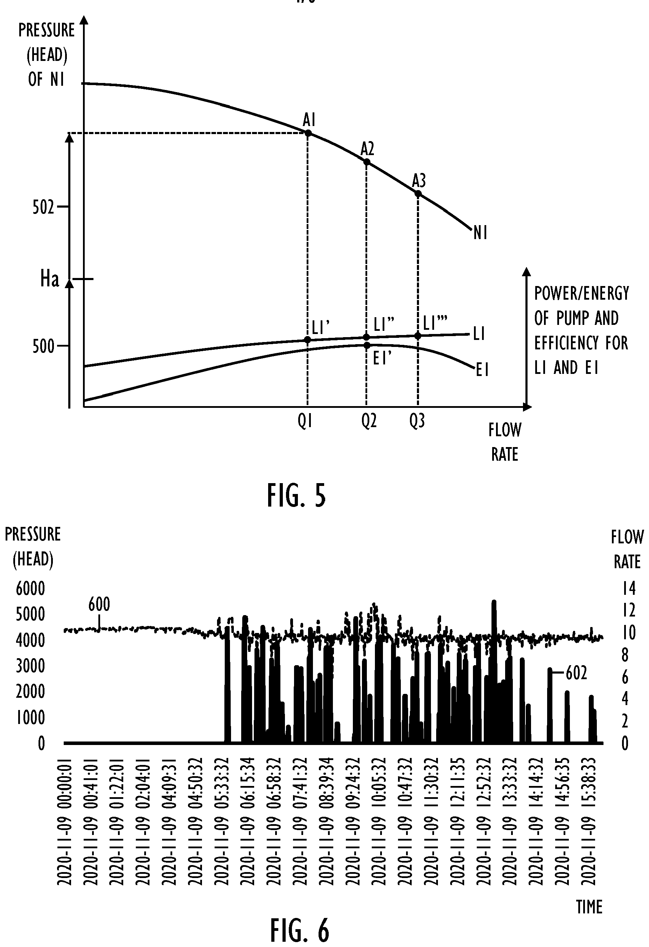

FIG. 5 shows example characteristic curves for the pump 152. Curve N1 shows the generated pressure (also called a head) of the pump in the y axis as a function of a flow rate in the x axis. As the flow rate increases, the pressure decreases.

Ha indicates the load of a pipeline connected to the pump in a static state. In the static state, Ha shows the physical lifting height of the pump.

The pump may be designed or set to work at different operation points along the curve N1. For example, a first working point of the pump is A1 at the flow rate Q1. At this point, the total pump output is the sum of a static resistance 500 and a dynamic resistance 502. A second working point of the pump is A2 at the flow rate Q2. A third working point of the pump may be A3 at the flow rate Q3. The set working point is limited to one point, wherein the pump produces the pressure according to the flow rate value.

The different pipelines in the water distribution system 140 have different resistance curves, so they are changing the curve N1. The design of pipelines such as a size and length as well the condition of the pipeline affect the resistance curve. In a way, the pump 152 may be regarded as a pump system as it is influenced also by the pipelines to which it is coupled with.

A curve L1 shows energy consumed by the pump as a function of a flow rate received.

A curve E1 shows the efficiency of the pump, i.e., the output power vs. the taken energy input.

At the working point A1, the energy consumption of the pump can be found from the crossing L1'.

Typically, the pump has an optimum point marked here as E1' (= the maximum of the curve E1). The corresponding pressure/flow point for the pump is a point A2. Optimally, the pump is designed and set to work at this point or close to that.

One or more of the characteristic curves may form the maintenance model 120A of the pump 152. The curve N1 may be used as a function to calculate the pressure related to the flow or vice versa. And the other curve L1 may be used to calculate the power consumed and the efficiency of the pump. Due to the fact that in real life the pump degrades i.e., its efficiency will decrease due aging, a pipeline will change, a flow may change to be turbulent or more laminar due to the flow or flowing material or particles etc., the real characteristics curves of the pump may be different than the original model characteristics curves measured or designed.

The pump 152 may be modelled as the maintenance model 120A using the characteristic curves N1 and L1. The curve E1 may be derived from the curves N1 and L1, or the curve E1 may be measured.

FIG. 6 shows an example of measured data of the water distribution system 140 over 16 hours between 00:00 to 16:00. FIG. 6 shows a large variation in the flow rate and the pressure (or head) depending on the usage of the water. A curve 600 illustrates the pressure, and bars 602 illustrate the flow rate.

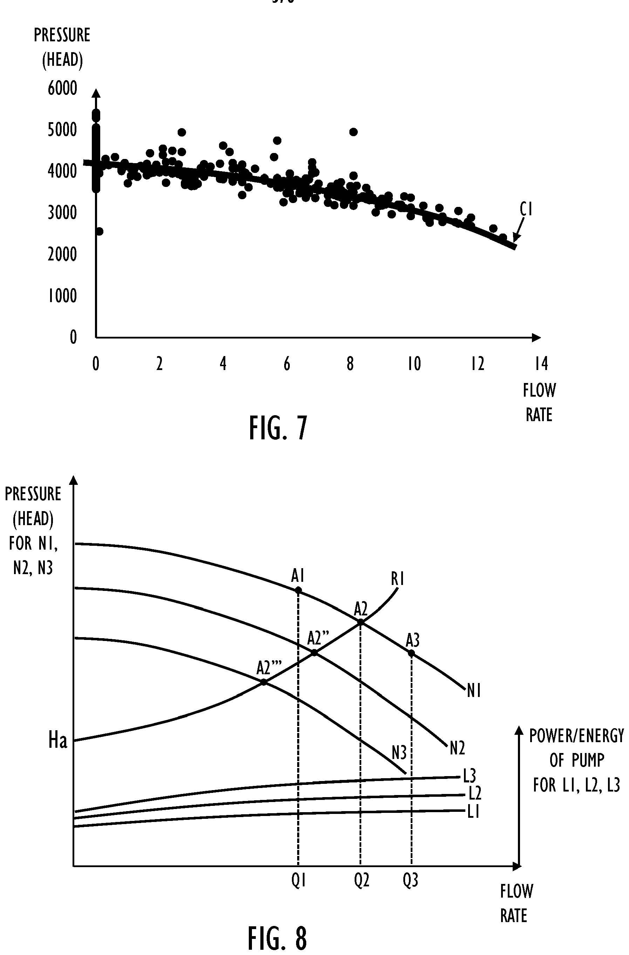

The dependence of the flow rate and the pressure illustrated of the example of the FIG. 6 is printed into FIG. 7. A fitting curve C1 is placed over the measured plots. The line corresponds to the characteristics curve of the pump of FIG. 5. However, many plots are not on the line. Other characteristic curves of the pump fit better to these plots and improve the modelling accuracy and reliability.

The speed of the pump (rpm, rotation per minute) is also affecting the characteristics and its control is often used for tuning or setting the pump or controlling the pressure needed.

In FIG. 8, an example of characteristics of the pump 152 at three different speeds N1, N2 and N3 is shown. The corresponding energy consumption curves are LI, L2 and L3.

A curve R1 is a so-called affinity curve showing an estimated curve at which the same efficiency is reached at different speeds versus pressure/flow rate. The curve R1 shows how the dynamic resistance changes when the flow increases. If the R1 shows the optimum efficiency at the point A2, the efficiency optimum efficiency may be received at point A2" at pump speed N2 and at point A2''' at pump speed N3. N1 may be 1500 rpm, N2 1400 rpm, and N3 1300 rpm, for example.

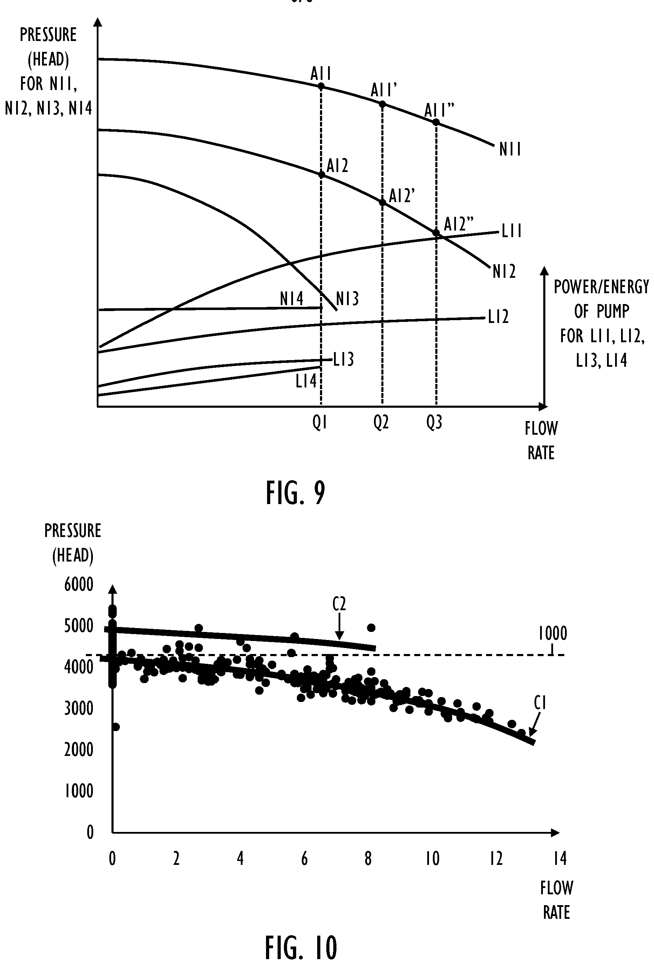

In FIG. 9, curves N11, N12, N13 and N14 are examples of different characteristics curves of different pumps. They have a different pump in use and different pipeline. The pump system N11 works well over the large flow rate range and keeps the pressure pretty high, but it has a larger power consumption.

The pump system N13 has lower power consumption but works only at a lower flow rate range. The pump system N12 has a reasonable pressure at a large flow rate, and its power consumption is reasonable. Many pump systems require an initial input pressure to be at its input in order to work. If the input pressure drops, the pump does not work properly as there is not enough pumping material at the input. Then the characteristic curve may not represent the pump function at all. The modelling may give error results. The characteristic curve N14 shows an example of the model when the input of the pump has a low pressure such as the air pressure (1 bar). This is a case is for example when the pipeline is broken and there is a flow, but the pump is not able to generate the pressure as normally in the normal (closed) pipeline system. Working points A11, A11', A11" are defined along the curve N11, and working points A12, A12', A12" along the curve N12.

The curves N11, N12 and N13 represent now different maintenance models (such as 300, 302, 304 in FIG. 3 and FIG. 4) of the pump system 152. When using the pump maintenance model for analysing and controlling the whole system 140, it is important to use the closest maintenance model related to the real pump system 152 and real conditions.

In the prior art, one fixed maintenance model for the pump 152 is used, for example curve N1 in FIG. 5. Now, if the flow rate is not the originally designed point (for example point A2) or the range (between A1-A3, for example), the maintenance model used may not be the optimal model. The non-optimal curve may give inaccurate and unreliable results.

In the prior art, the maintenance models of the pump 152 are mostly used for optimizing the efficiency and reaching the right flow rate and pressure. They are not designed to be used for monitoring and modelling the different daily use cases and conditions.

In the present embodiments, the right maintenance model 120A/120B depending on the case is used, for example N1/N2/N3 in the FIG. 8 or N11/N12/N13/N14 in the FIG. 9.

FIG. 10 shows an example of selecting a different characteristics model based on the pressure value. If the measured pressure is below a limit 1000, the system uses the characteristics curve C1 and if the pressure is above the limit 1000, the system uses the characteristics curve C2.

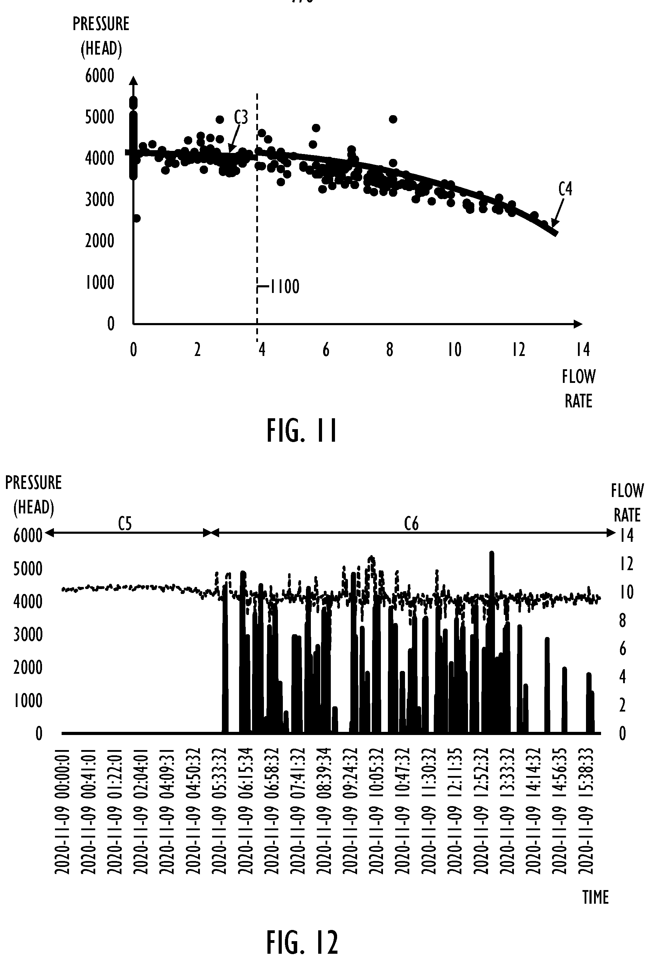

FIG. 11 shows an example of selecting a different characteristics model based on the flow rate value. If the flow rate measured is below a limit 1100 the system uses the characteristics curve C3 and if the flow rate is above the limit 1100, the system uses the characteristics curve C4.

FIG. 12 shows an example of selecting a different characteristics model based on time. During 00:00- 05:30 the system uses the characteristics curve C5, and during 05:30 - 16:00 the system uses the characteristics curve C6.

The different extensions and combinations may be used and mixed to make rules to select one or more characteristics curves to be used depending the measured parameter such as a pressure, flow rate, temperature, content of the pumping material or any ambient condition or time of the day, day, weekday or weekend, or season. The measured variable 172 is measured in most embodiments from the front of pump 152, i.e, from the input of the pump 152. However, the measured variable 172 may be measured from the output of the pump 152, or from some other measurement point in the pipeline system of the water distribution system 140 so that the maintenance model 120A is for some other component of the water distribution system 140.

Even though the invention has been described with reference to one or more embodiments according to the accompanying drawings, it is clear that the invention is not restricted thereto but can be modified in several ways within the scope of the appended claims. All words and expressions should be interpreted broadly, and they are intended to illustrate, not to restrict, the embodiments. It will be obvious to a person skilled in the art that, as technology advances, the inventive concept can be implemented in various ways.

## Claims

1. An apparatus (100) for operating a maintenance model modelling a part of a water distribution system (140), comprising:
a sensor (170) positioned in one measurement point, and configured to measure (1304) a measured variable (172) from the water distribution system (140);
one or more memories (104) including computer program code (106);
and
one or more processors (102) configured to execute the computer program code (106) to cause the apparatus (100) to perform at least the following:
obtaining (1308) the maintenance model (120A);
comparing (1310) the measured variable (172) to an allowed variable range (122A) of the maintenance model (120A); and
based on the comparing (1310), replacing (1318) the maintenance model (120A) with a maintenance model variant (120B).

2. The apparatus of claim 1, wherein the apparatus (100) is caused to perform the following:
performing the replacing (1318) based on a best match (1312) of the measured variable (172) against the allowed variable range (122B) of the maintenance model variant (120B) in the comparing (1310).

3. The apparatus of any preceding claim, wherein the apparatus (100) is caused to perform the following:
performing the comparing (1310) based on a plurality of values of the measured variable (172) measured during a past measurement period (1314).

4. The apparatus of claim 3, wherein the apparatus (100) is caused to perform the following:
for the comparing (1310), calculating an arithmetic mean to represent an average value of the plurality of values of the measured variable (172) measured during the past measurement period (1314).

5. The apparatus of any preceding claim, wherein the allowed variable range (122A) relates to an input of the maintenance model (120A) or to an output of the maintenance model (120A).

6. The apparatus of any preceding claim, wherein the apparatus (100) comprises:
one or more additional sensors (180) positioned in one or more other measurement points, and configured to measure one or more additional measured variables (182) from the water distribution system (140), and
the apparatus (100) is caused to perform the following:
in the comparing (1310), comparing (1316) also the one or more additional measured variables (182) to one or more additional allowed variable ranges (130A) of the maintenance model (120A).

7. The apparatus of any preceding claim, wherein the apparatus (100) comprises:
a user interface (110) configured to interact with a user, and
the apparatus (100) is caused to perform the following:
simulating (1320) an operation of a part of the water distribution system (140) using the maintenance model (120A) or the maintenance model variant (120B); and
outputting (1322), via the user interface (110), the simulated operation.

8. The apparatus of claim 7, wherein the apparatus (100) is caused to perform the following:
outputting (1324), via the user interface (110), data related to the measured variable (172).

9. The apparatus of claim 8, wherein the apparatus (100) is caused to perform the following:
outputting (1326), via the user interface (110), data related to the allowed variable range (122A) of the maintenance model (120A), and the allowed variable range (122B) of the maintenance model variant (120B).

10. The apparatus of claim 8 or 9, wherein the apparatus (100) is caused to perform the following:
outputting (1328), via the user interface (110), data related to the present maintenance model variant (120B), and data related to the previous maintenance model (120A).

11. The apparatus of any preceding claim, wherein the measured variable (172) comprises a measured flow (174) and/or a measured pressure (176) and/or a measured temperature (178), and the allowed variable range (122A) comprises a flow range (124) and/or a pressure range (126) and/or a temperature range (128).

12. The apparatus of any preceding claim, wherein the maintenance model (120A) comprises one of the following: a pump maintenance model (300), a valve maintenance model (320), a reservoir maintenance model, a water tank maintenance model, a water tower maintenance model (310), a cistern maintenance model, a pumping station maintenance model, an elevated section of a pipeline maintenance model.
